# EUROPÄISCHE PATENTANMELDUNG

(11) **EP 0 802 597 A2**
(43) Veröffentlichungstag der Anmeldung: **22.10.1997**
(21) Anmeldenummer: 97106220.3
(22) Anmeldetag: 16.04.1997
(51) Int. Cl.: H02B 13/02, H02B 1/30

(54) **Schaltfeld**

(30) Priorität: 18.04.1996 DE 19615313
(71) Anmelder: AEG Sachsenwerk GmbH, D-93055 Regensburg (DE)
(72) Erfinder: Zimmerer, Rudolf, 93192 Wald (DE)
(74) Vertreter: Dreiss, Fuhlendorf, Steimle & Becker, Patentanwälte

(57) **Zusammenfassung**

Ein Schaltfeld für eine luftisolierte Schaltanlage mit einem Einbauten (14,16,20) tragenden Gerüst weist eine wannenförmige Rückwand (1) und einen Frontrahmen (4) auf, die durch Profilschienen (6,8) miteinander verbunden sind. Um eine erhöhte mechanische Steifigkeit des so gebildeten Gerüsts zu erzielen, sind die Profilschienen (6,8) einstückig mit der Bodenplatte (7) bzw. der oberen Abdeckung (5) verbunden.

## Beschreibung

Die Erfindung betrifft ein Schaltfeld gemäß dem Oberbegriff des ersten Anspruchs.

Ein bekanntes Schaltfeld dieser Art (DE 3812507 A1), das für eine luftisolierte Schaltanlage geeignet ist, besitzt ein Gerüst, das Einbauten wie Sammelschienen, Schalt- und Meßeinrichtungen, Antriebseinrichtungen, Kabelabgänge und dergleichen trägt. Dieses Gerüst ist zugleich Teil eines Schaltfeldgehäuses, das eine wannenförmige Rückwand und einen mit Abstand davor angeordneten, ebenfalls profilierten Frontrahmen aufweist. Die Verbindung zwischen Rückwand und Frontrahmen erfolgt durch je eine Profilschiene im Bereich der oberen und unteren Ecken, wobei diese Profilschienen in die Gehäusetiefe laufende Gerüstkanten bilden. Die oberen Profilschienen sind im Querschnitt im wesentlichen U-förmig ausgebildet und über Knotenbleche mit der Rückwand bzw. dem Frontrahmen verschraubt. Die unteren Profilschienen weisen dagegen einen C-förmigen Querschnitt auf und sind vom Gehäuseinneren aus mit ihren freien C-Schenkeln an die Rückwand bzw. den Frontrahmen angeschraubt. Der Frontrahmen besteht aus vier ebenfalls mehrfach abgewinkelten Blechen, wobei zwei senkrechte Seitenwangen durch eine Bodenplatte und ein oberes Querprofil miteinander verbunden sind. Alle vier Frontrahmenteile weisen in einer Ebene liegende Abschnitte auf, welche zu einer in einer senkrechten Ebene liegenden Frontfläche zusammengefügt sind und deren zum Zentrum gerichtete Seitenkanten je einen abgewinkelten Randstreifen aufweisen, die als Kragen zusammengefügt eine Türöffnung bilden. Von Nachteil ist bei diesem Aufbau die Vielzahl der einzelnen, teilweise durch Schweißen, teilweise durch Schrauben zusammenzufügenden Einzelteile, wobei ein so aufgebautes Gerüst für Zwecke der Montage von Einbauten und des Transports eine noch nicht befriedigende Stabilität aufweist.

Der Erfindung liegt die Aufgabe zugrunde, bei einem Schaltfeld gemäß dem Oberbegriff des ersten Anspruchs Maßnahmen zu treffen, durch welche eine Stabilitätsverbesserung des Gerüsts unter Anwendung einer verminderten Zahl von Einzelteilen erreicht wird.

Die Lösung dieser Aufgabe erfolgt gemäß der Erfindung durch die kennzeichnenden Merkmale des ersten Anspruchs.

Bei einem Aufbau eines Schaltfeldes gemäß der Erfindung werden durch einstückige Ausbildung jeweils der beiden unteren Profilschienen mit der zugeh÷rigen Bodenplatte und der oberen Profilschienen mit der zugeh÷rigen oberen Abdeckung Verbindungsmittel zwischen Rückwand und Frontrahmen bereitgestellt, die gegen Parallelverschiebung in sich steif sind und auch eine hohe Verwindungssteifigkeit bei geringster Teilezahl aufweisen. Diese Vorteile werden noch dadurch unterstützt, daß der Frontrahmen eine einstückige Frontplatte mit am Außenrand rundum in die Gehäusetiefe abgewinkelten Randstreifen aufweist, von welchen der untere unmittelbar mit der Bodenplatte und die senkrechten Randstreifen zumindest mittelbar mit dem Rücken der an die Bodenplatte angeformten C-förmigen Profilleisten, insbesondere durch Nieten, fest verbunden sind.

Sofern die für die Verarbeitung zur Verfügung stehende rohe Blechplatinengröße nicht zur einstückigen Herstellung des Frontrahmens ausreicht, können an den senkrechten Seitenrändern derselben in die Gehäusetiefe laufende Seitenwangen angesetzt werden, die zusΣtzlich mit den unteren und oberen waagerechten Seitenrändern der Frontplatte fest verbunden werden, um die aus der Kastenform zu gewinnende hohe Verwindungssteife zu erhalten. Die Verwendung von Seitenwangen ermöglicht dabei in besonders einfacherweise die Anordnung von Holmen, welche über den oberen waagerechten Randstreifen der Frontplatte nach oben hinausragen und die gegenüber der Frontplatte nach hinten zurückgesetzt sind, um beispielsweise einen separaten Steuerschrank frontbündig in die Schaltfeldkontur einfügen zu können. Diese Holme werden vorzugsweise mit U-förmigem Querschnitt ausgestattet, um sie formsteif auszubilden, wobei die offenen Seiten der Schenkel zum Gehäuseinnenraum hin und dabei aufeinander zu weisen. An den frontseitigen Schenkein der Holme läßt sich dann in einfacher Weise zum Beispiel der Steuerschrank festlegen, während der jeweils in der Gehäusetiefe hinten stehende Schenkel als Abkantung bis zur Bodenplatte hin weitergeführt ist und insbesondere mit der jeweils zur oberen Abwinklung der C-Profilschiene in Anlage tritt. Es ist dort die Möglichkeit gegeben, eine zusätzliche mechanische Verbindung zur weiteren Versteifung vorzusehen. Die mit der Bodenplatte verbundenen unteren Profilschienen sind durch mehrmaliges Abkanten ihrer Randbereiche im Querschnitt flach C-förmig ausgebildet, wobei der Rückensteg mehrfach breiter ist als die angeformten U-förmigen Randzonen. Dieser breite Rückensteg ermöglicht eine großflächige, stabile Verbindung mit der Rückwand und dem Frontrahmen. Dabei schließt sich jeweils an die untere Längskante des C-Profils einstückig die Bodenplatte an, die dadurch mit Abstand oberhalb der durch den unteren Randstreifen von Rückwand und Frontrahmen gebildeten Ebene liegt, nachdem die U-förmigen Randzonen der C-Profilschienen unmittelbar auf diesem Randstreifen aufsitzen. Die die C-Profilschienen verbindenden Seitenränder der Bodenplatte sind daher zur Versteifung und Abstützung nach unten abgekantet und weisen eine Höhe auf, die derjenigen des benachbarten C-Schenkels der Profilschienen entspricht. Dieser abgewinkelte Seitenrand liegt somit ebenfalls auf dem betreffenden Randstreifen der Rückwand bzw. des Frontrahmens auf.

Um Kabel oder dergleichen von unten einführen zu können, kann die Bodenplatte mit wenigstens einem Ausschnitt versehen sein, bei dem zumindest die parallel zur Rückwand oder zur Frontplatte verlaufenden Ausschnittkanten ebenfalls nach unten abgewinkelt sind und neben einem Scheuerschutz auch eine Versteifung der Bodenplatte bewirken.

Die obere Abdeckung kann in der Fläche zwischen den angeformten Profilschienen Entlüftungsöffnungen aufweisen, denen selbsttätig öffnende Platten zugeordnet sein können, die bei einem Überdruck im Schaltfeld selbsttätig aufgehen. Dabei können die Randkanten dieser Entlüftungsöffnungen in das Gehäuseinnere hinein abgewinkelt sein, so daß sie neben einer Versteifung der Abdeckung auch zur Befestigung von Trag-elementen dienen können, die im Gehäu-seinneren Funktions-elemente tragen oder die lediglich als Schott- oder Luftführungswände ausgebildet sein können bzw. beide Funktionen erfüllen.

Der Kragen von wenigstens einer in der Frontplatte vorgesehenen Türöffnung kann parallel zur Ebene der Frontplatte abgewinkelte Kragenrandabschnitte aufweisen, die außer der zusätzlichen Versteifung des Frontrahmens auch dazu dienen, eine gegengleich ausgebildete, höhenverstellbar angeordnete Tür daran zu verriegeln. Dazu können die senkrecht verlaufenden Kragenrandabschnitte mäanderförmig ausgebildet und von der Türöffnung weggerichtet sein, während die waagrechten Kragenwandabschnitte als ununterbrochene Streifen nach oben abgewinkelt sein können. Eine zugeordnete Tür kann dann formschlüssig durch Höhenverstellung in und außer Eingriff mit diesen Kragenrandabschnitten gebracht werden.

Die Erfindung ist nachfolgend anhand der Skizzen eines Ausführungsbeispiels näher erläutert.Es zeigen:
- Figur 1:: ein Schaltfeld mit an einem Gerüst gehaltenen Einbauten in einem Seitenschnitt,
- Figur 2:: eine perspektivische Ansicht eines Gerüstteils im Bereich einer unteren, in die Gerüsttiefe laufenden Seitenkante,

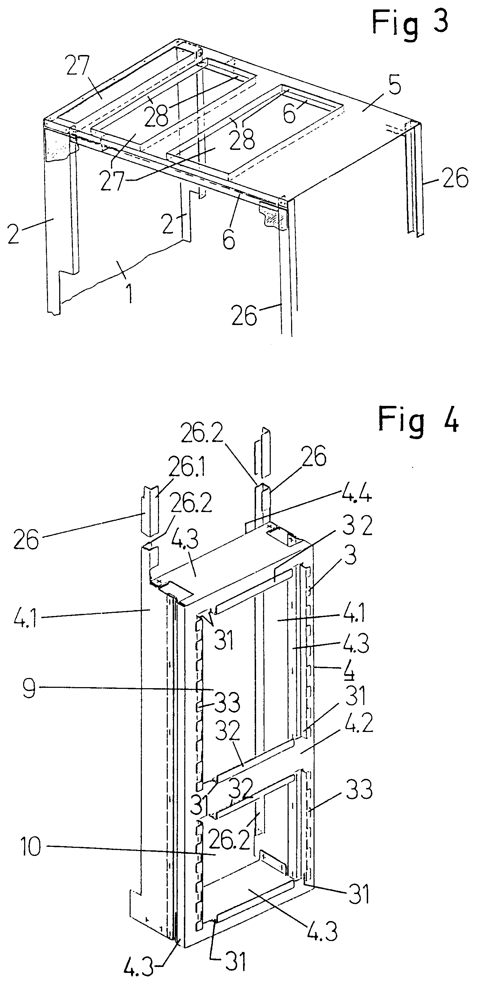

- Figur 3:: eine perspektivische Ansicht eines Gerüstteiles im Bereich einer Abdeckung und
- Figur 4:: eine perspektivische Ansicht eines Gerüstfrontrahmens.

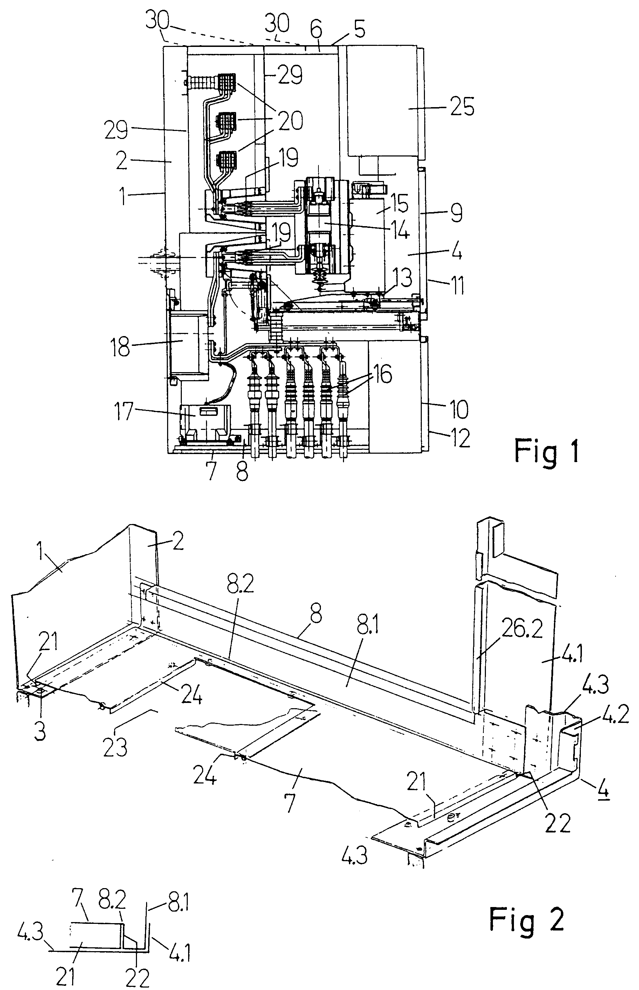

Gemäß Figur 1 ist ein Schaltfeld für eine luftisolierte Schaltanlage mit einem insbesondere für die Montage ausgelegten Gerüst ausgestattet, das zumindest als Teil eines äußeren Schaltfeldgehäuses dient und vorzugsweise eine wannenförmige Rückwand (1) mit rechtwinklig abgebogenen Randstreifen (2 und 3), einen ebenfalls formsteif profilierten Frontrahmen (4) sowie deckenseitig oben eine flächenhafte Abdeckung (5) als auch bodenseitig unten eine Bodenplatte (7) mit im Bereich der in die Gerüsttiefe laufenden Seitenkanten einstückig angeformten C-förmigen Profilschienen (8) besitzt. Der Frontrahmen (4) weist zumindest eine, vorliegend jedoch zwei überander angeordnete Türöffnungen (9,10) auf, die mit heb- und schwenkbaren sowie schwenkbar angelenkten Türen (11,12) verschlossen sind und den Zugang zu einem horizontal verschiebbar gelagerten Schaltwagen (13) mit Leistungsschalter (14) und Antrieb (15) bzw. zu Kabelanschlüssen (16), Spannungswandler (17) oder Stromwandler (18) ermöglichen. Dabei ist der Leistungsschalter (14) über Einfahrkontakte (19) einerseits mit Sammelschienen (20) und andererseits mit dem Stromwandler (18) bzw. den Kabelanschlüssen (16) elektrisch verbunden.

Die die Grundfläche des Schaltfeldes im wesentlichen bestimmende Bodenplatte (7) mit den einstückig angeformten Profilschienen (8) bildet ebenso wie die in gleicher Technologie hergestellte großflächige Abdeckung (5) mit den einstückig angeformten Profilschienen (6) aufgrund der vielfachen Abwinkelungen ein in sich verwindungssteifes und gegen Parallelverschiebung gesichertes Verbindungsmittel. Die unteren, im Querschnitt C-förmig ausgebildeten Profilschienen (8) weisen dabei einen durchgehenden, senkrecht stehenden Rückensteg (8.1) auf, dessen Enden einerseits mit senkrechten Randstreifen (2), mit der Rückwand (1) und mit senkrechten Seitenwangen (4.1) des Frontrahmens (4) vorzugsweise durch Nieten, starr verbunden sind. Der Frontrahmen (4) weist eine einstückige Frontplatte (4.2) auf, aus welcher die Türöffnungen (9,10) ausgeschnitten sind und die an ihrem Außenumfang rundum in die Gehäusetiefe abgewinkelte Randstreifen (4.3) aufweisen. Der Frontrahmen ist somit ebenfalls wannenförmig mit hoher mechanischer Stabilität ausgestattet.

Die Seitenwangen (4.1) und (4.3) können bei ausreichender Größe der zur Verarbeitung bereitstehenden Blechplatte einstückig ausgebildet sein. Bei unzureichender Breite der Blechplatte sind, wie vorliegend dargestellt, die Seitenwangen (4.1) eigenständig hergestellt und beispielsweise durch Nieten sowohl mit den senkrechten Randstreifen (4.3) als auch mit den waagerechten Randstreifen (4.3) fest verbunden. Auf dem unteren Randstreifen (3) der Rückwand (1) wie auf dem unteren Randstreifen (4.3) des Frontrahmens (4) sitzt die Bodenplatte (7) auf, die mit ihren jeweils zugekehrten Seitenrandbereichen an diesen Randstreifen (3,4.3) z.B. vernietet ist. Die die C-Profilschienen (8) verbindenden SeitenrΣnder (21) der Bodenplatte (7) sind nach unten zu den Randstreifen (3 bzw. 4.3) hin abgewinkelt und stehen darauf auf. Diese Seitenränder (21) weisen eine Breite auf, die durch den C-Schenkel (22) vorgegeben ist, an dessen Kante die Bodenplatte (7) anschließt. Die Hauptfläche der Bodenplatte (7) steht somit in einem Abstand oberhalb der durch die Randstreifen (3, 4.3) gebildeten Ebene. Dieser Abstand ist durch die Breite der Seitenränder (21) bestimmt. Da diese Ränder so hoch sind wie der C-Schenkel (22) des benachbarten C-Profils, liegt die untere Abkröpfung der C-Profilschiene ebenfalls formstabil auf den Randstreifen (3 und 4.3) auf.

Um die Kabelverbindungen (16) von unten einführen zu können, ist die Bodenplatte (7) wenigstens mit einem Ausschnitt (23) versehen, bei dem zumindest die parallel zur Frontplatte (4.2) oder zur Rückwand (2) verlaufenden Ausschnittkanten (24) nach unten abgewinkelt sind, um eine ausreichende Formsteifigkeit der Bodenplatte (7) und einen Scheuerschutz zu gewährleisten.

Die Frontplatte (4.2) des Frontrahmens (4) reicht über eine Höhe, die durch die Türöffnungen (9,10) bestimmt ist. Um dabei die Unterbringung eines eigenständigen Steuerkastens (25) innerhalb der kubischen Schaltfeldkontur zu ermöglichen, ist der Frontrahmen an seinen in die Gehäusetiefe zurückgesetzten Seitenwangen (4.1) mit Holmen (26) versehen, die über den oberen Randstreifen (4.3) nach oben ragen und dort mit dem zugehörigen Endbereich der Abdeckung (5) bzw. der Profilschienen (6) starr verbunden sind. Die Abdeckung (5) ist andernends mit den senkrechten Randstreifen (2) der Rückwand (1) und gegebenenfalls einem oberen waagerechten, ebenfalls abgewinkelten Randstreifen beispielsweise vernietet. Die Holme (26) weisen einen U-förmigen , in sich stabilen Querschnitt auf und sind so angeordnet, daß ihre offenen Seiten aufeinander zuweisen. An den parallel zur Frontplatte (4.2) stehenden vorderen Schenkeln (26.1) der Holme (26) kann der Steuerkasten (25) festgesetzt werden. Diese Schenkel enden nahe dem und oberhalb des oberen Randstreifens (4.3). Dagegen erstreckt sich der in der Gehäusetiefe hinten stehende Schenkel (26.2) als Doppelabkantung der jeweiligen Seitenwange (4.1) in Richtung zur zugehörigen unteren Profilschiene (8) und kann mit derselben zusammenstoßen und gegebenenfalls mechanisch fest verbunden werden, um die Gerüststeifigkeit weiter zu steigern.

Die aus einer Platte gebildete Abdeckung (5) mit ihren zugehörigen angeformten Profilschienen (6) reicht von der Rückwand (2) bis an den Frontrahmen (4) bzw. an dessen Holme (26) und ist jeweils daran z.B. durch Nieten fest verbunden. In der waagerechten Fläche der Abdeckung (5) befinden sich Entlüftungsöffnungen (27), die nach unten in das Gehäuseinnere hinein abgewinkelte Randkanten (28) aufweisen. Insbesondere an parallel zur Rückwand (1) verlaufenden Randkanten (28) sind dabei in das Gehäuseinnere hineinreichende Tragelemente (29) festgesetzt, die insbesondere als TrennwΣnde ausgebildet sind und Träger der Sammelschienen (20) oder anderen Bauelementen sein können bzw. Funktionsräume voneinander abtrennen, in denen infolge von Störlichtbögen oder dergleichen ein Überdruck entstehen kann. Den einzelnen Entlüftungsöffnungen (27) sind daher nach außen öffnende Druckentlastungsklappen (30) zugeordnet, die bei Überdruck im betreffenden Raum, beispielsweise in dem den Leistungsschalter (14) aufnehmenden Raum, in dem Sammelschienenraum oder in dem die Kabelanschlüsse (16) aufnehmenden Raum selbsttätig öffnen und heiße Gasströme nach oben in einen Bereich abstr÷men lassen, in dem sich Bedienungspersonal üblicherweise nicht aufhält.

Im übrigen sind an der Frontplatte (4.2) noch senkrecht zur Plattenebene nach außen gerichtete Kragen (31) einstückig angeformt, die den jeweiligen öffnungsrand umgrenzen und die parallel zur Ebene der Frontplatte (4.2) abgewinkelte Kragenrandabschnitte (32, 33) aufweisen. Die an den senkrechten Kragenabschnitten (31) vorgesehenen Kragenrandabschnitte (33) sind zinnen- oder mäanderförmig ausgebildet und von der jeweiligen Türöffnung (9 oder 10) weg gerichtet. Dagegen sind die waagerechten Kragenrandabschnitte (32) als Streifen ausgebildet und jeweils nach oben abgewinkelt. Eine mit gegengleich ausgebildeten Kragenabschnitten versehene Tür kann hierbei um eine senkrechte Achse heb- und senkbar gelagert werden in der Weise, daß durch Höhenverschiebung die Tür in und außer Eingriff mit den Kragenrandabschnitten (33 und 32) gebracht werden kann. überdecken sich dabei die Kragenrandabschnitte (32,33) in einer der Türhöhenlagen, dann ist ein unbeabsichtigtes Aufschlagen der Türe auch bei hohem Überdruck im Gerätegehäuse ausgeschlossen. Dabei tragen die Kragen und die Kragenrandabschnitte zur zusätzlichen Versteifung der Frontplatte (4.2) bei.

Insbesondere ergibt sich bei einer Ausgestaltung eines Schaltfeldes in der vorgegebenen Weise ein hochstabiler Gerüstaufbau mit wenigen Einzelteilen, die zum einen in sich verwindungssteif und gegen Parallelverschiebung gesichert sind, und die andererseits in einfacher Weise zusammengefügt werden können und dabei ein formsteifes Gerüst bilden, das die bei der Montage von Einbauten, beim Transport oder durch innere Druckereignisse auftretende Kräfte ohne wesentliche Verformungen aufnimmt.

## Patentansprüche

1. Schaltfeld für eine luftisolierte Schaltanlage mit einem Einbauten tragenden Gerüst, das zumindest als Teil eines Schaltfeldgehäuses eine wannenförmige Rückwand, einen wenigstens mit einer Türöffnung versehenen Frontrahmen, oben sowie unten je zwei in die Gehäusetiefe laufende, den Frontrahmen mit der Rückwand im Kantenbereich verbindende Profilschiene und eine obere Abdeckung sowie eine untere Bodenplatte aufweist, wobei die Rückwand, der Frontrahmen, die Bodenplatte und die Profilschienen aus mehrfach abgewinkelten Blechen bestehen, dadurch gekennzeichnet, daß die unteren Profilschienen (8) einstückig mit der Bodenplatte (7) und die oberen Profilschienen (6) einstückig mit der Abdeckung (5) verbunden sind.

2. Schaltfeld nach Anspruch 1, dadurch gekennzeichnet, daß der Frontrahmen (4) eine einstückige Frontplatte (4.2) mit aus der Plattenfläche ausgeschnittener Türöffnung (9,10) und am Außenränd rundum in die Gehäusetiefe abgewinkelten Randstreifen aufweist und daß auf den unteren waagerechten Randstreifen (4.3) der Frontplatte (4.2) und der Rückwand (1) der zugekehrte Seitenrandbereich der Bodenblatte (7) festgesetzt ist.

3. Schaltfeld nach Anspruch 1 oder 2, dadurch gekennzeichnet, daß an den senkrechten Seitenrändern (4.3) der Frontplatte (4.2) in die Gehäusetiefe laufende Seitenwangen (4.1) vorgesehen sind, die zusätzlich mit den unteren und oberen waagerechten Seitenrändern (4.3) der Frontplatte (4.2) fest verbunden sind und ab dem Bereich der freien hinteren Seltenkante (4.4) des oberen Randstreifens (4.3) einstückig angeformte, über den oberen Randstreifen (4.3) hinausragende Holme (26) aufweist.

4. Schaltfeld nach Anspruch 3, dadurch gekennzeichnet, daß die Holme (26) U-förmigen Querschnitt besitzen und mit ihren offenen Seiten aufeinander zuweisen.

5. Schaltfeld nach Anspruch 4, dadurch gekennzeichnet, daß der jeweils in der Gehäusetiefe hinten stehende Schenkel (26.2) der Holme (26) als Abkantung der jeweiligen Seitenwange (4.1) in Richtung zur unteren Profilschiene (8) bzw. zur Bodenplatte (7) hin weitergeführt ist.

6. Schaltfeld nach Anspruch 3 oder einem der folgenden, dadurch gekennzeichnet, daß die Seitenwangen einstückig mit der Frontplatte verbunden sind.

7. Schaltfeld nach Anspruch 2 oder einem der folgenden, dadurch gekennzeichnet, daß einer Türöffnung (9,10) ein Kragen (31) zugeordnet ist, der parallel zur Ebene der Frontplatte (4.2) abgewinkelte Kragenrandabschnitte (32,33) aufweist.

8. Schaltfeld nach Anspruch 7, dadurch gekennzeichnet, daß die an den senkrechten Kragenabschnitten (31) vorgesehenen Kragenrandabschnitte (33) mΣanderförmig ausgebildet sowie von der Türöffnung (9,10) weggerichtet und die waagerechten Kragenrandabschnitte (32) als Streifen ausgebildet und nach oben abgewinkelt sind.

9. Schaltfeld nach Anspruch 1 oder einem der folgenden, dadurch gekennzeichnet, daß die Abdeckung (5) mit den zugeh÷rigen Profilschienen (6) aus einer Platte gebildet ist, die von der Rückwand (1) bis an den Frontrahmen (4,26) reicht und jeweils daran festgesetzt ist und daß in der Fläche der Abdeckung (5) Entlüftungsöffnungen (27) vorgesehen sind, deren Randkanten (28) in das Gehäuseinnere hinein abgewinkelt sind.

10. Schaltfeld nach Anspruch 9, dadurch gekennzeichnet, daß an wenigstens einer der abgewinkelten Randkanten (28) ein im Gehäuseinneren vorgesehenes Tragelement (29) festgesetzt ist.

11. Schaltfeld nach Anspruch 1 oder einem der folgenden, dadurch gekennzeichnet, daß die unteren Profilschienen (8) im Querschnitt C-förmig ausgebildet sind und mit ihrem durchgehenden, senkrecht stehenden Rückensteg (8.1) mit senkrechten Randstreifen (2,4.3) der Rückwand (1) und des Frontrahmens (4) verbunden sind und daß sich jeweils an die untere Längskante (8.2) des nach oben weisenden kurzen C-Profilschenkels (22) die Bodenplatte (7) einstückig anschließt.

12. Schaltfeld nach Anspruch 11, dadurch gekennzeichnet, daß die die unteren C-Profilschienen (8) verbindenden Seitenränder (21) der Bodenplatte (7) nach unten abgekantet sind und eine Höhe aufweisen, die der Höhe des benachbarten C-Schenkels (22) der Profilschienen (8) entspricht und daß die Seitenränder (21) auf dem unteren Randstreifen (4.3 bzw. 3) des Frontrahmens (4) bzw. der Rückwand (1) aufstehen.

13. Schaltfeld nach Anspruch 1 oder einem der folgenden, dadurch gekennzeichnet, daß die Bodenplatte (7) wenigstens einen Ausschnitt (23) aufweist, dessen parallel zur Frontplatte (4.2) oder Rückwand (1) verlaufende Ausschnittkanten (24) nach unten abgewinkelt sind.

14. Schaltfeld nach Anspruch 4 oder einem der folgenden, dadurch gekennzeichnet, daß der nach unten geführte hintere Schenkel (26.2) der Seitenwangen (4.1) bis an die zugehörige Profilschiene (8) reicht.
